# EUROPEAN PATENT SPECIFICATION

(11) **EP 2 985 266 B1**
(45) Date of publication and mention of the grant of the patent: **15.01.2020**
(21) Application number: 15177044.3
(22) Date of filing: 16.07.2015
(51) Int. Cl.: C03B 17/04, C03C 3/091, C03C 3/095, C03C 17/00, C03C 17/06

(54) **PROCESS FOR PRODUCING GLASS TUBES AND USE THEREOF**
VERFAHREN ZUR HERSTELLUNG VON GLASRÖHREN UND DEREN VERWENDUNG
PROCÉDÉ DE PRODUCTION DE TUBES EN VERRE ET SON UTILISATION

(30) Priority: 14.08.2014 DE 102014111646
(43) Date of publication of application: 17.02.2016
(73) Proprietor: Schott AG, 55122 Mainz (DE)
(72) Inventor: Kass, Christof, 95643 Tirschenreuth (DE)
(74) Representative: Fuchs Patentanwälte Partnerschaft mbB

(56) References cited:
- DE-U1-202010 014 985
- US-A1- 2001 055 930

## Description

### Field of Invention

The present invention relates to the production of glass tubes according to the so-called Danner process, and particularly relates to the production of glass tubes made of borosilicate glass with high homogeneity and chemical resistance, particularly for applications for the production of containers for storage of substances for pharmaceutical applications, such as ampoules, vials or syringe bodies. A further aspect of the present invention relates to the use of a glass composition of a borosilicate glass for the aforementioned applications.

### Background of the Invention

For the production of glass tubes with high homogeneity and dimensional accuracy, in particular of glass tubes for the production of containers for storage of substances for pharmaceutical applications, such as ampoules, vials or syringe bodies, the so-called Danner process is often used for cost reasons, in which a glass melt emerging out of a melting trough flows onto the outer surface of a rotating cylindrical tube body (so-called Danner blowpipe, hereinafter Danner mandrel) to form thereon a hollow glass melt body. The glass melt is drawn via the tubular body, which serves as a shaping member, in a predetermined direction to a forward end, where the glass melt passes on to a free shaping. The inner profile of the glass tube is substantially determined by the outer contour of the tubular body near the front end.

For the production of glass tubes for containers for storage of substances for pharmaceutical applications borosilicate glass is commonly used, which is particularly characterized by a high chemical resistance and low ion release. Examples of compositions of a borosilicate glass for such applications are disclosed in U.S. patents US 4,386,164 and US 3,054,686.

However, if the tubular body, which serves as a shaping body, is made of Al₂O₃-containing materials, such as typically fireclay, mullite or sillimanite, the characteristics of the inner surface of the glass tube are adversely altered for pharmaceutical applications. In particular, the release of alkali ions from the inner surface of the glass tube is increased because chemical elements diffuse out of the material of the tubular body into the inner surface of the glass tube.

If the tubular body, which serves as a shaping body, is made of other common materials, such as zirconium silicate, a strong tendency for devitrification occurs during the shaping process in the region of the tubular body, which results in an undesirable impairment of the quality of the glass tubes and of pharmaceutical packaging containers produced therefrom subsequently. For reducing the release of ions into the glass and the tendency for devitrification layers or coatings of the shaping body have been proposed in the prior art.

As an example DE 10141586 C1 discloses for a so-called Vello process for drawing glass tubes that the tube drawing needle used in this process, which is mounted stationary, is coated with a shell made of a temperature-resistant material, preferably made of precious metals.

For reducing the tendency for devitrification in a Vello process, DE 102004024767 B4 discloses that the emission coefficient for thermal radiation at any point of a tapered portion provided at the front end of the tube drawing needle is greater than in the other regions of the tube drawing needle. As materials at the front end of the tube drawing needle in particular base metals are used, particularly suitable high-temperature resistant steels, that can form in particular an oxide layer under the prevailing process conditions to advantageously influence the emission coefficient for thermal radiation in this region.

From the prior art it is also known, to provide the tubular body that is used in a Danner process and serves as a shaping tube body (so-called Danner mandrel) with a coating of platinum. An example of such a Danner mandrel is disclosed in US 2007/0087194 A1 and enables in comparison to conventional Danner mandrels of a ceramic material an enhanced resistance of the Danner mandrel to chemical and physical stress and thus significantly higher production temperatures due to a coating of platinum or a platinum group metal (PGM).

DE 100 27 699 A1 of the applicant discloses a borosilicate glass of high chemical resistance including zirconia and lithium oxide and containing a rather high amount of K₂O. The composition of the borosilicate glass consists (in wt.-%, based on oxide) of: SiO₂ 71.5 to 74.5, B₂O₃ 8.0 - 11.0, Al₂O₃ 5.0 - 7.0, Li₂O 0.1- <0.5, Na₂O 5.0 - 6.5, K₂O 1.8 to 3.0, MgO 0.0 - 1.0, CaO 0.0 - 2.0, MgO + CaO 0.0 - 2.0, ZrO₂ 0.5 - 2.0, CeO₂ 0.0 - 1.0, F 0.0-0.3 and optionally conventional fining agents in conventional amounts. It is also disclosed that the glass comprises Al₂O₃ in an amount of at least 5.0 wt.-% and not more than 7.0 wt.-%, preferably at most 6.5 wt.-%, whereby the glass should be relatively stable to crystallization.

DE 20 2010 014 985 U1 of the Applicant discloses a similar borosilicate glass for use for pharmaceutical containers produced from glass tubes drawn from this glass.

US 20010055930 A1 discloses a process for drawing glass tubes and discusses the problem of devitrification during the hot forming of the glass tubes. It is disclosed that K20 in the concentration range of 0.5-2 wt.-% reduces devitrification. While the process is in general discussed for all kinds of drawing methods, including the Danner-process, the specific embodiments disclosed only relate to a so-called Vello-process using a drawing needle coated with a platinum coating.

However, elaborate research by the inventor has shown an undesirably strong tendency for devitrification particularly in the production of glass tubes using certain borosilicate glasses when these are drawn on Danner mandrels which are provided with a platinum coating. In particular, it has been found that a coating of platinum or a platinum group metal does not always result in an acceptably low devitrification rate for any type of glass and that by means of the enhanced Danner mandrel having a coating of platinum or a platinum group metal (PGM) as described above often glass tubes cannot be drawn from commonly used glass compositions with sufficient quality, in particular from conventional compositions for borosilicate glasses.

### Summary of Invention

It is an object of the present invention to provide an enhanced Danner process for producing glass tubes, in particular glass tubes for pharmaceutical applications, by means of which the glass tubes can be produced from borosilicate glass with a high dimensional accuracy and high chemical resistance at a low tendency for devitrification. According to a further aspect of the present invention there is to be provided an enhanced use of a glass composition in such a production process.

These problems are solved by a process for producing glass tubes according to claim 1 and by a use according to claim 11 and 14, respectively. Further advantageous embodiments are the subject-matter of the dependent claims.

According to the present invention there is provided a process for producing glass tubes, comprising: applying a glass melt onto the outer surface of a rotating cylindrical shaping body to form thereon a hollow glass melt body; and withdrawing the hollow glass melt body over the shaping body in a predetermined direction toward a front end for forming a glass tube; wherein the shaping body is coated with platinum or a platinum alloy in regions (portions) that are in contact with the glass melt. According to the present invention the composition of the glass melt comprises in weight percent (wt.-%): SiO₂ 71.0 to 77.0; B₂O₃ 9.0 to 12.0; Na₂O 5.5 to 8.0; K₂O 0.0 to 2.0; Al₂O₃ 6.5 to 8.0; CaO 0.0 to 1.5; BaO 0.0 to 2.0; Li₂O 0.0 to 0.5; ZrO₂ 0.0 to 5.0.

Elaborate series of experiments by the inventor have shown that the simultaneous presence of aluminum oxide and potassium oxide, in particular in a non-zero amount of potassium oxide, can help to enhance the devitrification characteristics so that the respective glass melt can be drawn to a glass tube of high quality by means of a so-called Danner mandrel that is coated with platinum or a platinum alloy. Thus, according to the present invention a high dimensional accuracy and homogeneity of the glass tubes can be accomplished, which is very important for use for pharmaceutical primary packaging. The amount of aluminum oxide in the composition of the glass melt needs to have an upper limit, because aluminum oxide in general increases the melting temperature. According to the present invention the above mixing ratio has proved to be of particular advantage.

Most neutral glasses contain sodium and, from a thermodynamic point of view, are positioned in the stability region of cristobalite (SiO₂). Series of experiments by the inventor have shown that it is possible to delay devitrification and to lower the temperature of devitrification, if one adds aluminum oxide is added to the glass melt. By adding aluminum oxide the formation of another crystal phase, namely albite (sodium feldspar), is thermodynamically possible. The crystal phase albite devitrifies at lower temperatures and it was determined that thereby the formation of cristobalite can be delayed.

Furthermore, a longer service life and durability of the shaping body used can be accomplished according to the present invention due to the coating of platinum or platinum alloy.

Preferably, the shaping body is coated with the platinum or platinum alloy at least in regions (portions) that are in contact with the glass melt. In principle, any platinum-containing alloy may be considered as the platinum alloy, such as Pt/Rh-alloys, Pt/Ir-alloys, Pt/Au-alloys or suitable platinum group metals (PGM). In this way, for the afore-mentioned glass composition a consistently low ion release of the inner glass surface can be accomplished according to the present invention. For this purpose, the platinum or platinum alloy is preferably provided as a thin sheet, which is used for coating or cladding the rotating cylindrical shaping body. As an alternative, a suitable spray-coating of platinum or platinum alloy may be provided. Here, the cylindrical shaping body may be provided as a ceramic support body or as a support body made of a metal, in particular as a hollow frame made of a metal.

According to a further embodiment the platinum or platinum alloy does not necessarily cover the entire cylindrical shaping body. Rather, it may be sufficient that only those portions of the cylindrical shaping body that are in a direct contact with the very hot glass melt are coated or cladded. Thus, it may be sufficient that the shaping body is coated with the platinum or platinum alloy starting with that portion on which the glass melt is poured onto the outer surface of the rotating cylindrical shaping body and up to a certain axial length and that the coating of platinum or platinum alloy stops before the front end of the shaping body, where usually a head made of a metal is disposed. For example, it may be sufficient if up to about 50% of the axial length of the shaping body, preferably up to about 75% of the axial length of the shaping body is coated with the platinum or platinum alloy, respectively starting with that portion on which the glass melt is poured onto the outer surface of the rotating cylindrical shaping body. This will depend on the further process parameters, in particular the withdrawal rate of the glass tubing, the wall thickness of the glass tubing, the inclination of the cylindrical shaping body, the viscosity of the glass melt used, the chamfering of the cylindrical shaping body at its front end.

According to a further embodiment, the composition comprises a sum total amount of K₂O and Al₂O₃ that is greater than 6.7 wt.-%. By adding potassium to the afore-mentioned glass composition, according to the present invention the tendendancy for devitrification and crystallization can be delayed further. Namely, potassium and sodium can both form feldspars, namely orthoclase (potassium feldspar) and albite (sodium feldspar), respectively. However, a miscibility gap exists between orthoclase and albite, i.e. it is not possible to form a mixed crystal or solid solution because of the very different sizes of sodium ions and potassium ions. The crystal structures do not allow this. Thus, if one adds potassium to a neutral glass melt already containing sodium and aluminum, according to the present invention the formation of another crystal is possible, namely the formation of orthoclase. Surprisingly, the inventor has found out that the more crystal phases are possible, the lower the probability of crystallization of these crystals is. According to the present invention the afore-mentioned glass composition is at a so-called triple point in a phase diagram or in its vicinity. At a triple point or in its vicinity three crystal phases directly compete for crystallization. Thus, the crystal phases interfere with each other and therefore according to the present invention the crystallization and devitrification can be delayed to a maximum.

According to a further embodiment, the composition comprises a sum total amount of K₂O and Al₂O₃ that is less than or equal to 10.0 wt.-%.With this composition, the amount of aluminum oxide is limited so that an acceptable melting temperature is ensured. According to the present invention, the simultaneous presence of potassium reduces the tendency for devitrification and crystallization, as described above.

According to a further embodiment, the composition comprises K₂O in an amount of more than 0.0 wt.-%., so that a certain amount of potassium in the glass melt is ensured in any case and the tendency for devitrification and crystallization can be effectively reduced.

According to a further embodiment, the composition comprises K₂O in an amount of at least 0.7 wt.-%, so that the position in the phase diagram of the glass composition described above is ensured. Elaborate series of experiments by the inventor have shown that the devitrification and crystallization can be reduced to an acceptable level just by the selective addition of K₂O under the process conditions. Particularly, this is the case for an amount of Al₂O₃ in the range between 6.5 wt.-% and 8.0 wt.-%, particularly when the sum total amount of K₂O and Al₂O₃ is greater than 6.7 wt.-%.

According to a further embodiment, the composition comprises K₂O in an amount in the range between 0.7 wt.-% and 2.0 wt.-%, i.e. this amount has an upper limit. Elaborate series of experiments by the inventor have shown that the devitrification and crystallization can be reduced to an acceptable level just by the selective addition of K₂O within these parameter limits under the process conditions. Particularly, this is the case for an amount of Al₂O₃ in the range between 6.5 wt.-% and 8.0 wt.-%, particularly when the sum total amount of K₂O and Al₂O₃ is greater than 6.7 wt.-%.

According to a further embodiment, the composition comprises K₂O in an amount in the range between 1.0 wt.-% and 2.0 wt.-%, i.e. this amount has an upper limit. Elaborate series of experiments by the inventor have shown that the devitrification and crystallization can be reduced to an acceptable level just by the selective addition of K₂O within these parameter limits under the process conditions. Particularly, this is the case for an amount of Al₂O₃ in the range between 6.5 wt.-% and 8.0 wt.-%, particularly when the sum total amount of K₂O and Al₂O₃ is greater than 6.7 wt.-%.

According to a further embodiment, the composition comprises CaO in an amount of less than 0.7 wt.-%. Series of experiments by the inventor have shown that calcium does not result in a further enhancement of the devitrification characteristics, because it can form a mixed crystal or solid solution with sodium, because the ion sizes of the two elements are similar.

According to a further embodiment, the composition is therefore free of CaO, i.e. the amount of CaO is negligible within the standard detection accuracy and standard tolerances in the mixing ratio of the raw materials.

According to a further aspect of the present invention, the composition of the glass melt comprises as a refining agent F in an amount between 0.0 wt.-% and 0.3 wt.-%, Cl⁻ in an amount between 0.0 wt.-% and 0.3 wt.-% and/or CeO₂ in an amount between 0.0 wt.-% and 1 wt.-%. In principle, however, any other appropriate refining agent may be used as well.

A further aspect of the present invention relates to the use of a glass of a composition as described above for producing glass tubes according to a Danner process, in which a glass melt is applied onto the outer surface of a rotating cylindrical shaping body for forming thereon a hollow glass melt body, which is withdrawn via the shaping body in a predetermined direction toward a front end for forming a glass tube, wherein the shaping body is coated with platinum or a platinum alloy in regions that are in contact with the glass melt.

According to a further aspect of the present invention, a glass tube produced by means of a method according to the present invention, as described above, is used for the production of containers for storing substances for pharmaceutical applications, in particular of ampoules, vials or syringe bodies.

The glass tubes according to the present invention have a particularly advantageous hydrolytic stability that is consistent over the course of production process.

### OVERVIEW ON DRAWINGS

Hereinafter, the present invention will be described with reference to the accompanying drawings and by way of example. In the drawings:
- Fig. 1: is a schematic diagram of a process according to the present invention for producing glass tubes according to the Danner process. and
- Fig. 2: is a diagram of measured values for the devitrification rate for glass compositions according to the present invention and for comparative examples.

### DETAILED DESCRIPTION OF PREFERRED EMBODIMENTS

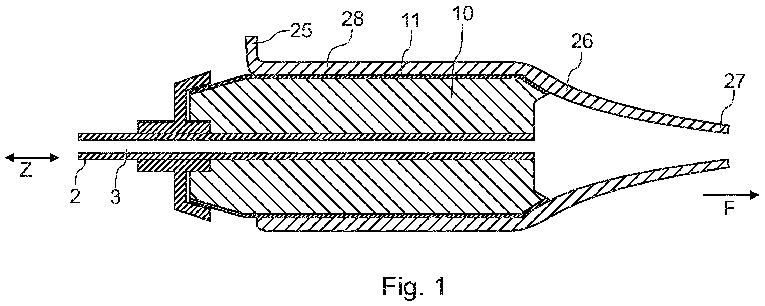

Fig. 1 shows a Danner mandrel configured according to the present invention, comprising a cylindrical quartz glass body 10 designed as a solid body or comprising a cylindrical body (not shown), which is coated with a silica glass coating of sufficient thickness. This body 10 is covered with a coating 11 of platinum or a platinum alloy, and is in particular cladded with a thin sheet of platinum or platinum alloy, so that it can serve as a shaping body for drawing glass tubes according to the known Danner process. The body 10 may also consist of any other suitable ceramic material or of a metal support body, which may be formed in particular as a hollow framework made of metal. The body 10 is supported on a shaft 2 having an axial inner bore 3 and is rotated at a constant rotational speed for the production of glass tubes. As necessary, air or a gas can be blown via the inner bore 3 into the drawing bulb 26 (hose of glass melt), which is formed at the front end of the body 10.

According to Fig. 1 a viscous glass melt 25, which is suitably conditioned and has the composition outlined in more detail in the following, flows onto the surface of the slowly rotating tubular Danner mandrel for forming a tubular glass melt body 28, which is slowly withdrawn from the Danner mandrel. According to Fig. 1, the front end of the Danner mandrel tapers conically.

Although not shown in Fig. 1, the rear and front end of the body, if viewed in the direction of withdrawal, may be formed as separate metal bodies, between which the actual body 10 is clamped or held clamped. Here, the front metal body, if viewed in the direction of withdrawal, may be chamfered in the direction of withdrawal, as shown schematically in Fig. 1.

Depending on the process conditions, the body 10 is not necessarily covered over its entire axial length with the platinum or platinum alloy. Rather, it may be sufficient that only those portions of the cylindrical shaping body 10 are coated or cladded that are in direct contact with the very hot glass melt. Thus, it may be sufficient that the shaping body 10 is coated with the platinum or platinum alloy starting with that portion on which the glass melt 25 is poured onto the outer surface of the rotating shaping body 10 and up to a certain axial length and thus stops before the front end of shaping body 10, if viewed in the direction of withdrawal. For example, it may be sufficient if up to about 50% of the axial length of the shaping body 10, more preferably up to about 75% of the axial length of the shaping body 10, is coated with the platinum or platinum alloy, respectively starting with that portion on which the glass melt 25 is poured onto the outer surface of the rotating cylindrical shaping body 10. This will depend on the further process parameters, in particular withdrawal rate of the glass tubing, wall thickness of the glass tubing, inclination of the cylindrical shaping body 10, viscosity of the glass melt used, chamfering of the cylindrical shaping body 10 at its front end. According to the present invention the coating prevents that the very hot glass melt reacts with the material of the shaping body 10, typically a ceramic material.

In the tables below, the glass compositions of embodiments according to the present invention and of comparative examples are given as well as the transition and melting temperatures. Furthermore, the devitrification rate is indicated that has been determined by the inventor for a platinum surface. The devitrification rate is a representative value for the drawing of glass tubes on a Danner mandrel that is coated with a platinum coating.

For the purpose of determining the crystallization behavior for the tables and additional examples listed hereinafter, the crystallization behavior has been determined for borosilicate glass according to ASTM C829-81. More specifically, the crystallization behavior is observed visually by this method. A glass sample set on a platinum holder is heat-treated in a furnace maintaining a specified constant temperature gradient. After the treatment, crystals grown in glass are observed by a microscope, and the liquidus temperature and temperature dependence of crystal growth are determined. Two types of sample holders are used. One is a trough-type platinum container which is filled with finely screened particles of test glass, and the other is a platinum tray in which a number of holes are perforated in a line. Larger screened particles of test glass are positioned one per hole on the plate. Based on these observations the devitrification rate has been determined by the inventor.

### Embodiments according to the invention

| | | **Example 1** | **Example 2** | **Example 4** |
|---|---|---|---|---|
| **component** | | **amount in wt.-%** | **amount in wt.-%** | **amount in wt.-%** |
| SiO₂ | | 73.60 | 73.40 | 72.16 |
| B₂O₃ | | 11.00 | 10.75 | 10.50 |
| | | | | |
| Na₂O | | 7.40 | 7.30 | 6.25 |
| K₂O | | 0.50 | 1.00 | 1.87 |
| Al₂O₃ | | 6.70 | 6.70 | 7.11 |
| | | | | |
| CaO | | 0.50 | 0.55 | 0.69 |
| BaO | | - | | 1.34 |
| F | | 0.15 | 0.15 | - |
| Cl⁻ | | 0.15 | 0.15 | 0.08 |
| CeO₂ | | - | - | . |
| Li₂O | | - | | |
| ZrO₂ | | | | |
| | | 100.00 | 100.00 | 100.00 |
| | | | | |
| Alpha | | 5.15 | 5.30 | 5.30 |
| Tg | | 550 | 550 | 565 |
| VA | | 1165 | 1165 | 1175 |
| Devitrification rate (µm/min) | | 0.10 | 0.10 | 0.05 |

For the glass compositions according to Examples 1, 2 and 4 an acceptably low devitrification rate could be detected. These glasses can be drawn to glass tubes using a Danner mandrel provided with a platinum coating, because the crystal growth is not too excessive.

### Comparative Examples

| | | **V1** | **V2** |
|---|---|---|---|
| **component** | | **amount in wt.-%** | **amount in wt.-%** |
| SiO₂ | | 75.65 | 75.35 |
| B₂O₃ | | 10.60 | 10.40 |
| | | | |
| Na₂O | | 6.50 | 7.25 |
| K₂O | | 0.60 | - |
| Al₂O₃ | | 5.20 | 5.45 |
| | | | |
| CaO | | 0.26 | 1.40 |
| BaO | | 0.40 | - |
| F | | - | 0.15 |
| Cl⁻ | | 0.25 | - |
| CeO₂ | | 0.37 | - |
| Li₂O | | 0.17 | |
| ZrO₂ | | | |
| | | 100.00 | 100.00 |
| | | | |
| Alpha | | 4.85 | 4.90 |
| Tg | | 550 | 565 |
| VA | | 1170 | 1160 |
| Devitrification rate (µm/min) | | 0.3 | 0.3 |

For the glass compositions according to Comparative Examples V1 and V2 an inacceptably high devitrification rate was detected. These glasses cannot be drawn to glass tubes using a Danner mandrel provided with a platinum coating, because the crystal growth is too excessive.

### Additional Examples

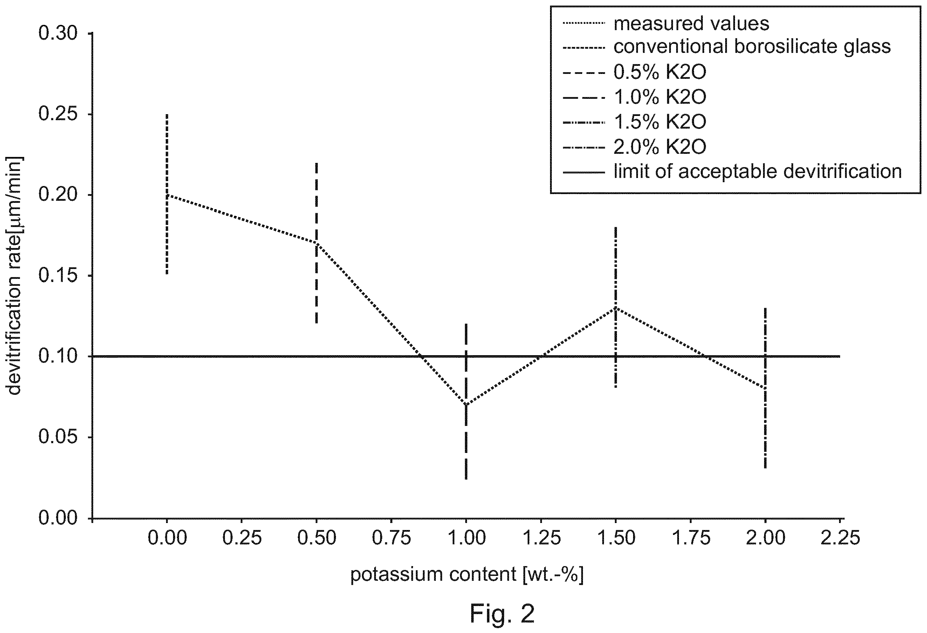

Fig. 2 is a diagram showing measured values for the devitrification rate for glass compositions according to the present invention and for comparative examples, in each case as a function of the amount of K₂O. Here, the horizontal line indicates the upper limit of an acceptable devitrification rate under standard process conditions for the drawing of glass tubes made of borosilicate glass (in particular for a standard temperature of the glass melt, standard flow rate of the glass melt, standard rate of withdrawal of the glass tube, standard diameter of the Danner mandrel and of the glass tube to be produced and wall thickness thereof).

The measured values for conventional borosilicate glass (such as the borosilicate glass disclosed in DE 100 27 699 A1 of the Applicant) and for an amount of K₂O of 0.5 wt.-% are an indication for an excessively high devitrification rate under the process conditions. For an amount of K₂O of more than about 0.7 wt.-% an acceptably low devitrification rate could be measured. For an amount of K₂O of more than 2.0 wt.-% also an excessively high devitrification rate at the process conditions was detected. The measurements show that the amount of K₂O preferably should have both an upper limit and a lower limit. Particularly, the glass composition preferably comprises K₂O in an amount in the range between 0.7 wt.-% and 2.0 wt.-%, more preferably in an amount in the range between 1.0 wt.-% and 2.0 wt.-%.

It should be noted that the upper limit value for an acceptable devitrification rate shown in Fig. 2 may be different for different process conditions, especially for different rates of withdrawal of the glass tube, but that the behavior of the devitrification rate described above applies correspondingly to such different process conditions, although the lower and/or upper limit of the amount of K₂O may well shift slightly. This is also true for the other parameter ranges for the composition of the glass melt, in particular for the lower and/or upper limit of the amount of Al₂O₃.

With a glass composition according to the present invention, it is possible to produce glass tubes having a good hydrolytic resistance, so they are basically suitable for the production of primary packaging for pharmaceutical applications. The glass tubes produced by the process according to the present invention are also characterized by excellent optical characteristics and a high homogeneity.

As will be readily apparent to the person skilled in the art upon studying the above description, the process of the invention is of course suited both for a continuous and noncontinuous production of glass tubes.

### List of reference numerals

- 2: glass tube
- 3: axial inner bore
- 10: shaping body
- 11: coating of platinum
- 25: glass melt
- 26: drawing bulb
- 27: glass tube
- 28: layer of glass melt

## Claims

1. A process for producing glass tubes, comprising:
applying a glass melt (25) onto the outer surface of a rotating cylindrical shaping body (10) to form thereon a hollow body of glass melt (28); and
withdrawing the hollow body of glass melt (28) over the shaping body (10) in a predetermined direction toward a front end for forming a glass tube (27); wherein
the shaping body is coated with platinum or a platinum alloy in regions that are in contact with the glass melt,
in which process the composition of the glass melt comprises in weight percent (wt.-%):
SiO₂ 71.0 to 77.0; B₂O₃ 9.0 to 12.0; Na₂O 5.5 to 8.0; K₂O 0.0 to 2.0; Al₂O₃ 6.5 to 8.0; CaO 0.0 to 1.5; BaO 0.0 to 2.0; Li₂O 0.0 to 0.5; ZrO₂ 0.0 to 5.0.

2. The process for producing glass tubes as claimed in claim 1, wherein the composition comprises a sum total amount of K₂O and Al₂O₃ that is greater than 6.7 wt.-%.

3. The process for producing glass tubes as claimed in claim 2, wherein the composition comprises a sum total amount of K₂O and Al₂O₃ that is less than or equal to 10.0 wt.-%.

4. The process for producing glass tubes as claimed in any of the preceding claims, wherein the composition comprises K₂O in an amount of more than 0.0 wt.-%.

5. The process for producing glass tubes as claimed in claim 4, wherein the composition comprises K₂O in an amount of at least 0.7 wt.-%.

6. The process for producing glass tubes as claimed in claim 5, wherein the composition comprises K₂O in an amount in the range between 0.7 wt.-% and 2.0 wt.-%.

7. The process for producing glass tubes as claimed in claim 6, wherein the composition comprises K₂O in an amount in the range between 1.0 wt.-% and 2.0 wt.-%.

8. The process for producing glass tubes as claimed in any of the preceding claims, wherein the composition comprises CaO in an amount of less than 0.7 wt.-%.

9. The process for producing glass tubes as claimed in claim 8, wherein the composition is free of CaO.

10. The process for producing glass tubes as claimed in any of the preceding claims, wherein the composition of the glass melt comprises as a refining agent F in an amount between 0.0 wt.-% and 0.3 wt.-%, Cl⁻ in an amount between 0.0 wt.-% and 0.3 wt.-% and/or CeO₂ in an amount between 0.0 wt.-% and 1 wt.-%.

11. Use of a glass having a composition comprising in weight percent (wt.-%) SiO₂ 71.0 wt.-% to 77.0 wt.-%; B₂O₃ 9.0 wt.-% to 12.0 wt.-%; Na₂O 5.5 wt.-% to 8.0 wt.-%; K₂O 0.0 wt.-% to 2.0 wt.-%; Al₂O₃ 6.5 wt.-% to 8.0 wt.-%; CaO 0.0 wt.-% to 1.5 wt.-%; BaO 0.0 wt.-% to 2.0 wt.-%; Li₂O 0.0 wt.-% to 0.5 wt.-%; ZrO₂ 0.0 wt.-% to 5.0 wt.-% for producing glass tubes in a process in which a glass melt (25) is applied onto the outer surface of a rotating cylindrical shaping body (10) for forming thereon a hollow body of glass melt (28), which is withdrawn via the shaping body (10) in a predetermined direction toward a front end for forming a glass tube (27), wherein the shaping body is coated with platinum or a platinum alloy in regions that are in contact with the glass melt.

12. The use as claimed in claim 11, wherein the content of K₂O is in the range between 0.7 wt.-% and 2.0 wt.-%.

13. The use as claimed in claim 11 or 12, wherein the composition of the glass melt comprises as a refining agent F at a content between 0.0 and 0.3 wt.-%, Cl⁻ at a content between 0.0 and 0.3 wt.-% and/or CeO₂ at a content between 0.0 and 1.0 wt.-%.

14. A use of a glass tube produced by a process as claimed in any of claims 1 to 10 for the production of containers for storage of substances for pharmaceutical applications.

## Patentansprüche

1. Verfahren zur Herstellung von Glasrohren, umfassend:
Aufbringen einer Glasschmelze (25) auf die äußere Oberfläche eines rotierenden zylindrischen Formgebungskörpers (10), wobei darauf ein Hohlkörper aus Glasschmelze (28) gebildet wird; und
Abziehen des Hohlkörpers aus Glasschmelze (28) über den Formgebungskörper (10) in einer vorher bestimmten Richtung hin zu einem vorderen Ende, wobei ein Glasrohr (27) gebildet wird; wobei der Formgebungskörper mit Platin oder einer Platinlegierung in Regionen, die mit der Glasschmelze in Kontakt sind, überzogen ist,
wobei in diesem Verfahren die Zusammensetzung der Glasschmelze in Gewichtsprozent (Gew.-%) umfasst:
SiO₂ 71,0 bis 77,0; B₂O₃ 9,0 bis 12,0; Na₂O 5,5 bis 8,0; K₂O 0,0 bis 2,0; Al₂O₃ 6,5 bis 8,0; CaO 0,0 bis 1,5; BaO 0,0 bis 2,0; Li₂O 0,0 bis 0,5; ZrO₂ 0,0 bis 5,0.

2. Verfahren zur Herstellung von Glasrohren wie in Anspruch 1 beansprucht, wobei die Zusammensetzung eine Gesamtmenge an K₂O und Al₂O₃, die höher als 6,7 Gew.-% ist, umfasst.

3. Verfahren zur Herstellung von Glasrohren wie in Anspruch 2 beansprucht, wobei die Zusammensetzung eine Gesamtmenge an K₂O und Al₂O₃, die niedriger als oder gleich 10,0 Gew.-% ist, umfasst.

4. Verfahren zur Herstellung von Glasrohren wie in einem der vorhergehenden Ansprüche beansprucht, wobei die Zusammensetzung K₂O in einer Menge von höher als 0,0 Gew.-% umfasst.

5. Verfahren zur Herstellung von Glasrohren wie in Anspruch 4 beansprucht, wobei die Zusammensetzung K₂O in einer Menge von mindestens 0,7 Gew.-% umfasst.

6. Verfahren zur Herstellung von Glasrohren wie in Anspruch 5 beansprucht, wobei die Zusammensetzung K₂O in einer Menge im Bereich zwischen 0,7 Gew.-% und 2,0 Gew.-% umfasst.

7. Verfahren zur Herstellung von Glasrohren wie in Anspruch 6 beansprucht, wobei die Zusammensetzung K₂O in einer Menge im Bereich zwischen 1,0 Gew.-% und 2,0 Gew.-% umfasst.

8. Verfahren zur Herstellung von Glasrohren wie in einem der vorhergehenden Ansprüche beansprucht, wobei die Zusammensetzung CaO in einer Menge von niedriger als 0,7 Gew.-% umfasst.

9. Verfahren zur Herstellung von Glasrohren wie in Anspruch 8 beansprucht, wobei die Zusammensetzung frei von CaO ist.

10. Verfahren zur Herstellung von Glasrohren wie in einem der vorhergehenden Ansprüche beansprucht, wobei die Zusammensetzung der Glasschmelze als ein Läutermittel F in einer Menge zwischen 0,0 Gew.-% und 0,3 Gew.-%, Cl⁻ in einer Menge zwischen 0,0 Gew.-% und 0,3 Gew.-% und/oder CeO₂ in einer Menge zwischen 0,0 Gew.-% und 1 Gew.-% umfasst.

11. Verwendung eines Glases mit einer Zusammensetzung, umfassend in Gewichtsprozent (Gew.-%) SiO₂ 71,0 Gew.-% bis 77,0 Gew.-%; B₂O₃ 9,0 Gew.-% bis 12,0 Gew.-%; Na₂O 5,5 Gew.-% bis 8,0 Gew.-%; K₂O 0,0 Gew.-% bis 2,0 Gew.-%; Al₂O₃ 6,5 Gew.-% bis 8,0 Gew.-%; CaO 0,0 Gew.-% bis 1,5 Gew.-%; BaO 0,0 Gew.-% bis 2,0 Gew.-%; Li₂O 0,0 Gew.-% bis 0,5 Gew.-%; ZrO₂ 0,0 Gew.-% bis 5,0 Gew.-%, zum Herstellen von Glasrohren in einem Verfahren, in dem eine Glasschmelze (25) auf die äußere Oberfläche eines rotierenden zylindrischen Formgebungskörpers (10) aufgebracht wird, wobei darauf ein Hohlkörper aus Glasschmelze (28) gebildet wird, der über den Formgebungskörper (10) in einer vorher bestimmten Richtung hin zu einem vorderen Ende abgezogen wird, wobei ein Glasrohr (27) gebildet wird, wobei der Formgebungskörper mit Platin oder einer Platinlegierung in Regionen, die mit der Glasschmelze in Kontakt sind, überzogen ist.

12. Verwendung wie in Anspruch 11 beansprucht, wobei der Gehalt an K₂O im Bereich zwischen 0,7 Gew.-% und 2,0 Gew.-% liegt.

13. Verwendung wie in Anspruch 11 oder 12 beansprucht, wobei die Zusammensetzung der Glasschmelze als ein Läutermittel F in einem Gehalt zwischen 0,0 und 0,3 Gew.-%, Cl⁻ in einem Gehalt zwischen 0,0 und 0,3 Gew.-% und/oder CeO₂ in einem Gehalt zwischen 0,0 und 1 Gew.-% umfasst.

14. Verwendung eines Glasrohrs, hergestellt durch ein Verfahren wie in einem der Ansprüche 1 bis 10 beansprucht zur Herstellung von Behältern zur Lagerung von Substanzen für pharmazeutische Verwendungen.

## Revendications

1. Procédé de fabrication de tubes de verre, comprenant :
appliquer un verre fondu (25) sur la surface extérieure d'un corps de formage cylindrique rotatif (10) pour former sur celui-ci un corps creux de verre fondu (28) ; et
étirer le corps creux de verre fondu (28) sur le corps de formage (10) dans une direction prédéterminée vers une extrémité avant pour former un tube de verre (27) ; dans lequel
le corps de formage est revêtu de platine ou d'un alliage de platine dans des régions qui sont en contact avec le verre fondu,
procédé dans lequel la composition du verre fondu comprend, en pourcentage en poids (% en poids) :
SiO₂ 71,0 à 77,0 ; B₂O₃ 9,0 à 12,0 ; Na₂O 5,5 à 8,0 ; K₂O 0,0 à 2,0 ; Al₂O₃ 6,5 à 8,0 ; CaO 0,0 à 1,5 ; BaO 0,0 à 2,0 ; Li₂O 0,0 à 0,5 ; ZrO₂ 0,0 à 5,0.

2. Procédé de fabrication de tubes de verre selon la revendication 1, dans lequel la composition comprend une somme totale en quantité de K₂O et de Al₂O₃ qui est supérieure à 6,7 % en poids.

3. Procédé de fabrication de tubes de verre selon la revendication 2, dans lequel la composition comprend une somme totale en quantité de K₂O et Al₂O₃ qui est inférieure ou égale à 10,0 % en poids.

4. Procédé de fabrication de tubes de verre selon l'une quelconque des revendications précédentes, dans lequel la composition comprend du K₂O dans une quantité supérieure à 0,0 % en poids.

5. Procédé de fabrication de tubes de verre selon la revendication 4, dans lequel la composition comprend du K₂O dans une quantité d'au moins 0,7 % en poids.

6. Procédé de fabrication de tubes de verre selon la revendication 5, dans lequel la composition comprend du K₂O dans une quantité comprise entre 0,7 % en poids et 2,0 % en poids.

7. Procédé de fabrication de tubes de verre selon la revendication 6, dans lequel la composition comprend du K₂O dans une quantité comprise entre 1,0 % en poids et 2,0 % en poids.

8. Procédé de fabrication de tubes de verre selon l'une quelconque des revendications précédentes, dans lequel la composition comprend du CaO dans une quantité inférieure à 0,7 % en poids.

9. Procédé de fabrication de tubes de verre selon la revendication 8, dans lequel la composition est exempte de CaO.

10. Procédé de fabrication de tubes de verre selon l'une quelconque des revendications précédentes, dans lequel la composition du verre fondu comprend comme agent de raffinage du F dans une quantité comprise entre 0,0 % en poids et 0,3 % en poids, du Cl⁻ dans une quantité comprise entre 0,0 % en poids et 0,3 % en poids et/ou du CeO₂ dans une quantité comprise entre 0,0 % en poids et 1 % en poids.

11. Utilisation d'un verre dont la composition comprend en pourcentage en poids (% en poids) SiO₂ 71,0 % en poids à 77,0 % en poids ; B₂O₃ 9,0 % en poids à 12,0 % en poids ; Na₂O 5,5 % en poids à 8,0 % en poids ; K₂O 0,0 % en poids à 2,0 % en poids ; Al₂O₃ 6,5 % en poids à 8,0 % en poids ; CaO 0,0 % en poids à 1,5 % en poids ; BaO 0,0 % en poids à 2,0 % en poids ; Li₂O 0,0 % en poids à 0,5 % en poids ; ZrO₂ 0,0 % en poids à 5,0 % en poids pour la fabrication de tubes de verre selon un procédé dans lequel un verre fondu (25) est appliquée sur la surface extérieure d'un corps de formage cylindrique rotatif (10) afin de former sur celui-ci un corps creux de verre fondu (28) qui est étiré par le biais le corps de formage (10) dans une direction prédéterminée vers une extrémité avant pour former un tube de verre (27), dans lequel le corps de formage est revêtu de platine ou d'un alliage de platine dans des régions en contact avec le verre fondu.

12. Utilisation selon la revendication 11, dans lequel la teneur en K₂O est comprise entre 0,7 % en poids et 2,0 % en poids.

13. Utilisation selon la revendication 11 ou 12, dans lequel la composition du verre fondu comprend comme agent de raffinage du F à une teneur comprise entre 0,0 et 0,3 % en poids, du Cl⁻ à une teneur comprise entre 0,0 et 0,3 % en poids et/ou du CeO₂ à une teneur comprise entre 0,0 et 1,0 % en poids.

14. Utilisation d'un tube de verre fabriqué par un procédé selon l'une quelconque des revendications 1 à 10 pour la fabrication de récipients pour le stockage de substances pour des applications pharmaceutiques.
